**Europäisches Patentamt**

**European Patent Office**

**Office européen des brevets**

(19)

(11) Veröffentlichungsnummer : **0 436 567 B1**

(12)

# EUROPÄISCHE PATENTSCHRIFT

(45) Veröffentlichungstag der Patentschrift :
28.10.92 Patentblatt 92/44

(51) Int. Cl.$^5$ : **B60K 28/16**

(21) Anmeldenummer : 89909394.2

(22) Anmeldetag : 11.08.89

(86) Internationale Anmeldenummer :
PCT/EP89/00953

(87) Internationale Veröffentlichungsnummer :
WO 90/03287 05.04.90 Gazette 90/08

(54) **VORTRIEBSREGELEINRICHTUNG.**

(30) Priorität : 30.09.88 DE 3833213

(43) Veröffentlichungstag der Anmeldung :
17.07.91 Patentblatt 91/29

(45) Bekanntmachung des Hinweises auf die
Patenterteilung :
28.10.92 Patentblatt 92/44

(84) Benannte Vertragsstaaten :
DE FR GB IT SE

(56) Entgegenhaltungen :
DE-A- 3 545 717
DE-A- 3 546 571

(56) Entgegenhaltungen :
DE-A- 3 724 575
FR-A- 2 591 962
Patent Abstracts of Japan, Vol. 9, Nr. 249
(M-419)(1972), 5. Okt. 1985

(73) Patentinhaber : ROBERT BOSCH GMBH
Postfach 30 02 20
W-7000 Stuttgart 30 (DE)

(72) Erfinder : SCHMITT, Johannes
Posener Strasse 19
W-7141 Schwieberdingen (DE)

(74) Vertreter : Kammer, Arno, Dipl.-Ing.
ROBERT BOSCH GmbH Zentralstelle Patente
2 Postfach 30 02 20
W-7000 Stuttgart 30 (DE)

EP 0 436 567 B1

Jouve, 18, rue Saint-Denis, 75001 PARIS

## Beschreibung

Stand der Technik

Aus der DE-A-35 45 717 ist eine Vortriebsregelung mit den Merkmalen des Oberbegriffs des Anspruchs 1 bekannt. Dort wird bei einsetzender Durchdrehneigung die Fahrzeugbeschleunigung gemessen und der zugehörige zulässige Wert der Querbeschleunigung bestimmt. Aus der maximal zulässigen Querbeschleunigung und dem Lenkwinkel wird dann die Kurvengrenzgeschwindigkeit bestimmt. Wird diese durch das Fahrzeug erreicht, so wird das Motormoment reduziert.

Vorteile der Erfindung

Es wird wie beim Stand der Technik ein deutlich verbessertes Fahrverhalten bei Kurvenfahrt erzielt.

Figurenbeschreibung

Anhand der Zeichnung wird ein Ausführungsbeispiel der Erfindung erläuetert.
Es zeigen:
Fig. 1 ein Blockschaltbild
Fig. 2 ein Diagramm zur Erläuterung

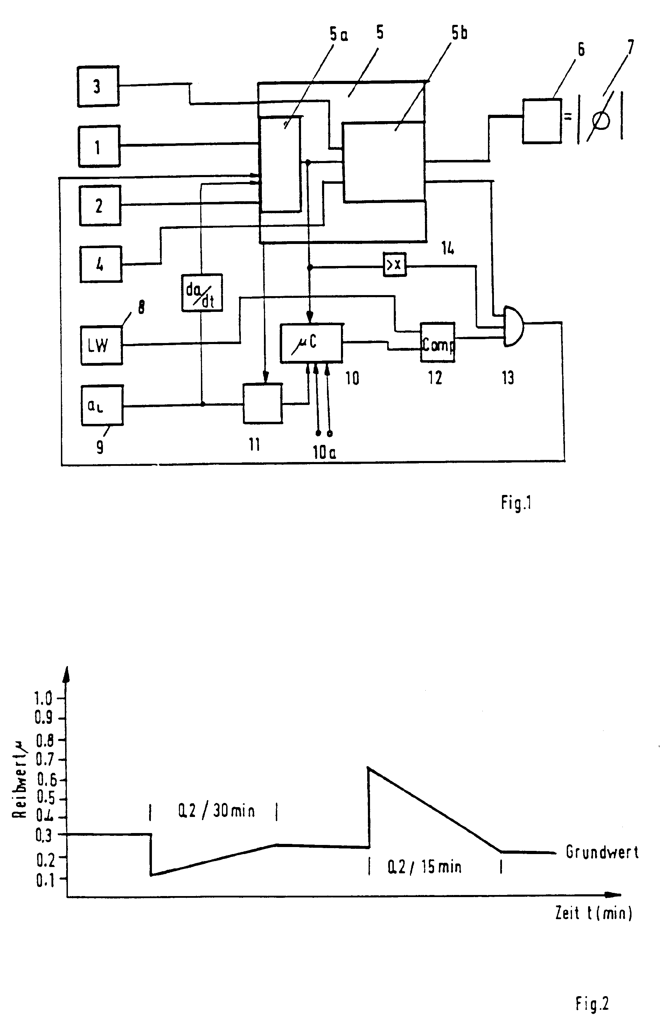

In Fig. 1 sind mit 1 und 2 den nicht angetriebenen Rädern zugeordnete und mit 3 und 4 den angetriebenen Rädern zugeordnete Radgeschwindigkeitsgeber bezeichnet. In einem Teilblock 5a des Rechners 5 wird aus den Geschwindigkeitssignalen der nicht angetriebenen Räder eine der Fahrzeuggeschwindigkeit angenäherte Referenzgeschwindigkeit $V_{Ref}$ durch Mittelwertbildung gewonnen. Diese Referenzgeschwindigkeit und die Radgeschwindigkeiten der angetriebenen Räder werden einem weiteren Teilblock 5b zur Schlupfregelung zugeführt. Tritt starker Antriebsschlupf auf, so wird ein Stellglied 6 betätigt, das hier eine Drosselklappe 7 im Sinne einer Minderung des Motormoments verstellt. Für die Erfindung ist es unbedeutend, ob auch noch die Bremsen der angetriebenen Räder in die Antriebsschlupfregelung einbezogen sind.
Um in der Kurve das Fahrzeugverhalten zu verbessern, ist zusätzlich ein Lenkwinkelgeber 8 vorgesehen. In einem Rechner 10 wird der Lenkwinkelgrenzwert $LW_{Krit}$ berechnet. Hierzu wird dem Rechner 10 die Referenzgeschwindigkeit $V_{Ref}$ aus dem Telblock 5a und der ermittelte Reibbeiwert $\mu$ zugeführt. Der Reibbeiwert $\mu$ wird in einem Block 11 durch folgendes Verfahren ermittelt: es ist ein Grundwert für $\mu$ von z.B 0,3 vorgegeben. Übersteigt die Fahrzeuglängsbeschleunigung, die der Längsbeschleunigungsgeber 9 mißt, einen Beschleunigungswert der dem vorgegebenen Grundwert oder einen davon abweichenden gerade vorhandenen Wert entspricht, so wird der Grundwert bzw. der vorhandene Wert um einen entsprechenden Wert hochgesetzt. Insbesondere bei Einsetzen einer Antriebsschlupfregelung oder einer Antiblockierregelung wird der vorhandene Wert für $\mu$ entsprechend der erzielten Beschleunigung oder Verzögerung, die der Längsbeschleunigungsgeber 9 mißt, hochgesetzt oder erniedrigt. Über eine Rampe mit geringer zeitlichen Steigung wird der neue Wert auf den Grundwert zurückgeführt. Dies ist in Fig. 2 gezeigt. Die Rampensteigungen sind (wie gezeigt) unterschiedlich steil. Der so ermittelte Näherungswert für $\mu$ wird dem Rechner 10 zugeführt der den Lenkwinkelgrenzwert $LW_{Krit}$ gemäß der folgenden Beziehung errechnet;
oder

$$LW_{Krit} = a\mu + b\mu/V_{Ref}^2$$

und der z.B lautet

$$LW_{Krit} = 50° \cdot \mu + 12 \cdot 10^4 \mu/V_{Ref}^2$$

Über Klemmen 10a werden zusätzlich noch Signale in den Rechner 10 eingegeben, die von der Temperatur und davon abhängig sind, ob die Fahrbahn naß oder trocken ist, und die den Grundwert für $\mu$ z.B. nach folgender Tabelle variieren

|  | Fahrbahn | |
|---|---|---|
|  | naß | trocken |
| Temp. $> 3°$ | $\mu = 0,25$ | $0,35$ |
| Temp. $\leq 3°$ | $\mu = 0,2$ | $0,3$ |

Der tatsächliche Lenkwinkel des Gebers 8 wird in einem Vergleicher 12 mit dem Lenkwinkelgrenzwert $LW_{Krit}$ verglichen und ein Signal erzeugt, wenn der Lenkwinkel größer als der Grenzwert wird. Dieses Signal wird einem Und-Gatter 13 zugeführt, das durchlässig ist, wenn noch zusätzlich vorhandener Antriebsschlupf durch den Teilblock 5b signalisiert wird und die Größe der Referenzgeschwindigkeit $V_{Ref}$ anzeigt, daß eine bestimmte Geschwindigkeit X (z.B. 30 Km/h) überschritten ist (Vergleicher 14).
Das Ausgangssignal des Und-Gatters 13 gelangt zum Teilblock 5a und bewirkt dort, daß die Referenzgeschwindigkeit sich nicht mehr mit den Radgeschwindigkeiten ändert, sondern quasi festgehalten wird. Im Block 5a wird hierzu die Steigung der Referenzgeschwindigkeit $V_{Ref}$ z.B. wie folgt bemessen:

$$\dot{V}_{Ref} = cg - d.g \{max (\dot{V}_S - \dot{V}_L) \text{ und } (\dot{V}_S - a_L^*)\}$$

z.B.

$$\dot{V}_{Ref} = 015 g - 0,1 g \{max (\dot{V}_S - \dot{V}_L) \text{ und } (\dot{V}_S - a_L^*)\}$$

Hierzu bedeuten: c und d Konstante, g die Gravitationskonstante, $V_S$ bzw. $V_L$ die Geschwindigkeit des schnellsten bzw. langsamsten Rads und $a_L*$ die um den Neigungswinkel korrigierte Fahrzeugbeschleunigung.

Durch das quasi-Konstanthalten der Referenzgeschwindigkeit regelt der Antriebsschlupfregler die Fahrzeuggeschwindigkeit auf etwa diese Geschwindigkeit ein. Verschwindet das Ausgangssignal des Und-Gatter 13 so erhöht sich die Referenzgeschwindigkeit mit einer vorgegebenen hohen Steigung, die z.B. der maximal möglichen gangabhängigen Beschleunigung entsprechen kann, auf die Geschwindigkeit das am langsamsten drehenden Rads.

**Patentansprüche**

1. Vortriebsregeleinrichtung, bei der eine Regelung des Motormoments bei Durchdrehneigung mittels einer Schlupfregelung erfolgt, enthaltend zusätzlich einen Fahrezeuglängsbeschleunigungsgeber (9), einen Lenkwinkelgeber (8) und eine Zusatzschaltung (10,12,13), die unter Zhilfenahme des Längsbeschleunigungssignals, des Lenkwinkelsignals, eines der Fahrzeuggeschwindigkeit entsprechenden Referenzsignals bei Erreichen eines Grenzwerts auf den Motor im Sinne einer Leistungsminderung einwirkt, <u>dadurch gekennzeichnet</u>, daß der Grenzwert ein von der fahrzeuggeschwindigkeit abhängiger Lenkwinkelgrenzwert $LW_{Krit}$ ist und daß bei Erreichen dieses Grenzwerts $LW_{Krit}$ und bei Vorliegen von Radschlupf die Referenzgeschwindigkeit wenigstens näherungsweise konstant gehalten wird, wodurch die Fahrzeuggeschwindigkeit in der Nähe der Referenzgeschwindigkeit festgehalten wird und daß die Referenzgeschwindigkeit bei Wegfall der Bedingung für die wenigstens ungefähre Konstanthaltung mit einer großen Steigung auf die Geschwindigkeit des langsamsten Rades nachgeführt wird.

2. Vortriebsregeleinrichtung nach Anspruch 1, dadurch gekennzeichnet, daß bei der Bestimmung des Lenkwinkelgrenzwerts $LW_{Krit}$ der ungefähre Reibbeiwert μ berücksichtigt wird.

3. Vortriebsregeleinrichtung nach Anspruch 2, dadurch gekennzeichnet, daß der Lenkwinkelgrenzwert nach der Formel $LW_{Krit} = \mu(a - \dfrac{b}{V_{Ref}^2})$be-rechnet wird, wobei a und b Konstante und $V_F$ die Referenzgeschwindigkeit sind.

4. Vortriebsregeleinrichtung nach Anspruch 2 oder 3, dadurch gekennzeichnet, daß der Reibbeiwert durch eine Lernbedingung ermittelt wird, wobei von einem Grundwert ausgegangen wird, der bei Auftreten von einen höheren Reibbeiwert anzeigenden Längsbeschleunigungssignalen entsprechend erhöht wird und mit einer geringen Steigung auf den Grundwert zurückgeführt wird.

5. Vortriebsregeleinrichtung nach Anspruch 4, dadurch gekennzeichnet, daß bei Einsetzen einer Antriebsschlupfregelung und/oder einer Antiblockierregelung der Grundwert entsprechend dem vorhandenen Längsbeschleunigungssignal erhöht oder erniedrigt wird.

6. Vortriebsregeleinrichtung nach einem der Ansprüche 2 - 5, dadurch gekennzeichnet, daß der Grundwert nach Maßgabe von zusätzlichen den Fahrbahnzustand kennzeichnenden Parametern (Außentemperatur, Nässe) variiert wird.

7. Vortriebsregeleinrichtung nach einem der Ansprüche 1 - 6, dadurch gekennzeichnet, daß die ungefähre Konstanthaltung der Fahrzeuggeschwindigkeit nur erfolgt, wenn ein vorgegebener Grenzwert der Fahrzeuggeschwindigkeit überschritten ist.

8. Vortriebsregeleinrichtung nach einem der Ansprüche 1 - 7, dadurch gekennzeichnte, daß die ungefähre Konstanthaltung der Referenzgeschwindigkeit durch die Vorgabe einer geringen Steigung erzielt wird.

9. Vortriebsregeleinrichtung nach Anspruch 8, dadurch gekennzeichnet, daß die geringe Steigung durch den Maximalwert aus der Differenz der Steigung des schnellsten und des langsamsten Rads und der Differenz der Steigung des schnellsten Rads und dem Fahrzeugbeschleunigungssignal vorgegeben ist

10. Vortriebsregeleinrichtung nach einem der Ansprüche 1 - 9, dadurch gekennzeichnet, durch seine Anwendung bei Fahrzeugen mit Allradantrieb.

**Claims**

1. Propulsion control device, with which a control of the engine torque when there is a tendency to spin takes place by means of a slip control, including in addition a longitudinal vehicle acceleration sensor (9), a steering angle sensor (8) and an additional circuit (10,12,13) which, with the assistance of the longitudinal acceleration signal, the steering angle signal, (lacuna) a reference signal corresponding to the vehicle speed, acts on the engine in the sense of a power reduction when a limit value is reached, characterized in that the limit value is a steering angle limit value $LW_{Krit}$ dependent on the vehicle speed and in that, if this limit value $LW_{Krit}$ is reached and there is wheel slip, the reference speed is kept at least approximately constant, as a result of which the vehicle speed is fixed around the reference speed, and in that, if the condition for the at least approximate keeping-constant ceases, the reference speed is corrected with a steep slope to the speed of the slowest wheel.

2. Propulsion control device according to Claim 1, characterized in that the approximate friction coefficient $\mu$ is taken into consideration in the determination of the steering angle limit value $LW_{Krit}$.

3. Propulsion control device according to Claim 2, characterized in that the steering angle limit value is calculated according to the formula $LW_{Krit} = \mu(a - \frac{b}{V^2_{Ref}})$ a and b being constants and $V_F$ [sic] being the reference speed.

4. Propulsion control device according to Claim 2 or 3, characterized in that the friction coefficient is determined by a learning condition, starting from a basic value which is increased correspondingly if longitudinal acceleration signals indicating a higher friction coefficient occur and is taken back to the basic value with a gentle slope.

5. Propulsion control device according to Claim 4, characterized in that, when a drive slip control and/or an anti-blocking control commences, the basic value is increased or decreased corresponding to the existing longitudinal acceleration signal.

6. Propulsion control device according to one of Claims 2 - 5, characterized in that the basic value is varied according to additional parameters characterizing the roadway condition (outside temperature, wetness).

7. Propulsion control device according to one of Claims 1 - 6, characterized in that the approximate keeping-constant of the vehicle speed only takes place if a specified limit value of the vehicle speed is exceeded.

8. Propulsion control device according to one of Claims 1 - 7, characterized in that the approximate keeping-constant of the reference speed is achieved by the specifying of a gentle slope.

9. Propulsion control device according to Claim 8, characterized in that the gentle slope is specified by the maximum value from the difference of the slope of the fastest wheel and of the slowest wheel and the difference of the slope of the fastest wheel and the vehicle acceleration signal.

10. Propulsion control device according to one of Claims 1 - 9, characterized by its application on vehicles with all-wheel drive.

**Revendications**

1°) Dispositif de limitation de glissement dans lequel on contrôle le couple du moteur, lorsque la tendance au patinage apparait, au moyen d'un dispositif antiglissement, comprenant complémentairement un indicateur (9) d'accélération longitudinal du véhicule, un indicateur (8) de l'angle de braquage et un organe de commutation (10, 12, 13) spécial qui en utilisant les signaux représentatifs de l'accélération longitudinale et de l'angle de braquage, ainsi qu'un signal de référence correspondant à la vitesse du véhicule, agit sur le moteur dans le sens d'une réduction de sa puissance lorsqu'une valeur limite est atteinte, caractérisé en ce que cette valeur est une valeur limite de l'angle de braquage $LW_{crit}$ et dépend de la vitesse du véhicule, la vitesse de référence est maintenue sensiblement constante lorsque la valeur limite $LW_{crit}$ est atteinte et qu'il y a patinage, de telle sorte que la vitesse du véhicule est maintenue proche de la vitesse de référence, la disparition des conditions correspondant à une constance sensiblement maintenue provoquant un ralenti rapide de la vitesse du niveau de celle de la roue la plus lente.

2°) Dispositif de limitation de glissement selon la revendication 1, caractérisé en ce que pour déterminer la valeur limite de l'angle de braquage $LW_{crit}$, on prend en compte la valeur approximative du coefficient de frottement $\mu$.

3°) Dispositif de limitation de glissement selon la revendication 2, caractérisé en ce que la valeur limite de l'angle de braquage est calculée au moyen de la formule :

$$LW_{crit} = \mu \left(a - \frac{b}{V^2_{Ref}}\right)$$

a et b sont des constantes, tandis que $V_{ref}$ est la vitesse de référence.

4°) Dispositif de limitation de glissement selon la revendication 2 ou 3, caractérisé en ce que le coefficient de frottement $\mu$ est soumis à une condition d'adaptation, à savoir qu'il dérive d'une valeur de base, qui est relevée corrélativement lorsque les signaux représentatifs de l'accélération longitudinale indiquent un coefficient de frottement plus élevé, puis est ramenée en pente douce à la valeur de base.

5°) Dispositif de limitation de glissement selon la revendication 4, caractérisé en ce que l'introduction d'un dispositif antipatinage et/ou d'un dispositif antiblocage, élève ou abaisse la valeur de base en fonction du signal d'accélération longitudinale.

6°) Dispositif de limitation de glissement selon l'une des revendications 2 à 5, caractérisé en ce que la valeur de base varie en fonction de paramètres complémentaires, caractéristiques de l'état de la chaussée (température extérieure, humidité).

7°) Dispositif de limitation de glissement selon l'une des revendications 1 à 6, caractérisé en ce que le maintien de la vitesse du véhicule à une valeur sensiblement constante a lieu si une valeur limite préimposée à la vitesse de véhicule a été dépassée.

8°) Dispositif de limitation de glissement selon l'une des revendications 1 à 7, caractérisé en ce que le maintien sensiblement constant de la vitesse de référence est obtenu en préimposant une faible pente.

9°) Dispositif de limitation de glissement selon la revendication 8, caractérisé en ce que la faible pente est préimposée par la valeur la plus importante provenant de la différence de la pente de la roue la plus rapide et de la roue la plus lente et de la différence de la pente de la roue la plus rapide et provenant du signal d'accélération du véhicule.

10°) Dispositif de limitation de glissement selon l'une des revendications 1 à 9, caractérisé en ce qu'il est utilisable dans des véhicules ayant toutes leurs roues motrices.

Fig.1

Fig.2